Europäisches Patentamt

European Patent Office

Office européen des brevets

(11) Publication number: **0 330 481 B1**

# EUROPEAN PATENT SPECIFICATION

(45) Date of publication of patent specification: **04.08.93** (51) Int. Cl.5: **G11B 7/09**

(21) Application number: **89301794.7**

(22) Date of filing: **23.02.89**

(54) Method for detecting tracking error in optical disk system and its optical system devices therefor.

(30) Priority: **26.02.88 JP 43585/88**
**26.07.88 JP 186245/88**

(43) Date of publication of application:
**30.08.89 Bulletin 89/35**

(45) Publication of the grant of the patent:
**04.08.93 Bulletin 93/31**

(84) Designated Contracting States:
**DE FR GB**

(56) References cited:
**EP-A- 0 096 881**
**EP-A- 0 228 620**

**PATENT ABSTRACTS OF JAPAN vol. 10, no. 34 (P-427)(2091) 08 February 1986, & JP-A-60 182523 (NEC HOME ELECTRONICS K.K.) 18 September 1985,**

**PATENT ABSTRACTS OF JAPAN vol. 11, no. 68 (P-553)(2515) 28 February 1987, & JP-A-61 230634 (NEC CORPORATION) 14 October 1986,**

**PATENT ABSTRACTS OF JAPAN vol. 10, no. 102 (P-448)(2159) 18 April 1986, & JP-A-60 236123 (MATSUSHITA DENKI SANGYO K.K.)**

**22 November 1985,**

(73) Proprietor: **FUJITSU LIMITED**
**1015, Kamikodanaka Nakahara-ku**
**Kawasaki-shi Kanagawa 211(JP)**

(72) Inventor: **Kurokawa, Kaneyuki**
**2-9-7, Nishiwaseda**
**Shinjuku-ku Tokyo 160(JP)**
Inventor: **Kato, Masayuki**
**2-202, 2196, Tsumada**
**Atsugi-shi Kanagawa 243(JP)**
Inventor: **Maeda, Satoshi**
**2-3-10, Sakae-cho**
**Atsugi-shi Kanagawa 243(JP)**
Inventor: **Yamagishi, Fumio**
**5-541, 40-1, Oya**
**Ebina-shi Kanagawa 243-04(JP)**
Inventor: **Ikeda, Hiroyuki**
**1-7, Mugita-cho Naka-ku**
**Yokohama-shi Kanagawa 231(JP)**

(74) Representative: **Billington, Lawrence Emlyn et al**
**HASELTINE LAKE & CO Hazlitt House 28 Southampton Buildings Chancery Lane London WC2A 1AT (GB)**

EP 0 330 481 B1

**Description**

The present invention relates to a tracking error detection method applicable commonly to an optical disk medium for different recording systems, and a diffraction grating and a photodetector for use in the above detection method.

In general, in prior-proposed optical disk recording systems, when information is read out after being recorded, due to the fact that an apparatus in the system detects errors such as when a laser beam spot cannot trace a normal track or a groove, there is a conventional tracking error detection method which employs error detecting spots before and after each main spot for recording and reading in addition to the main spots. But since this method has the disadvantage of not being applicable to a phase variation type optical disk or an additional storage type optical disk, it has long been desired to develop more advanced tracking error detection system technology which can be utilized for the numerous types of optical disks in common use.

In general, a microspot of a laser beam projected by an optical head is irradiated onto a predetermined track of a rotary optical disk recording medium to effect recording and reproducing of data. The laser beam spot must always remain on the track. Since the track is often displaced due to an inclination of an optical path based on the rotation of the disk, it is necessary to have the laser beam spot follow the displacement. The follow means consists of detecting a shift of the irradiation position of the spot and mechanically moving an objective lens used for the laser beam. The detection of the shift of the spot irradiation position is referred to as detection of a tracking error.

Previously , a push-pull method or a three-beam method has been employed as tracking error detection methods, but neither of them is completely satisfactory. Such a three-beam method is disclosed in EP-A-0 096 881.

Another prior-art embodiment according to the preamble of the independent claims and disclosed in JP-A-60 182 523 uses two diffraction gratings for generating a plurality of sub-spots used to produce a tracking error signal, but employs a method similar to the three beams method. In accordance with the present invention, there is provided an apparatus and a method for detecting a tracking error as defined in claims 1 and 6 respectively.

An embodiment of the present invention may provide an advanced method for solving the problems of the existing art tracking error detection method in which when a tracking error is detected by three laser beams, a second spot and a third spot are disposed on one side of a first spot to detect the tracking error.

An embodiment of the invention may provide a new method in which, when the production of a focusing error is undesirable, an inclination of an optical disk will not interfere with the focusing error detection process.

Reference is made, by way of example, to the accompanying drawings in which:

Fig. 1 illustrates a proposed push-pull tracking error detection method;

Fig. 2 illustrates a proposed three-beam tracking error detection method;

Fig. 3 shows an apparatus for effecting a proposed three-beam tracking error detection method;

Fig. 4 illustrates a shift of spots for a pre-groove of the recording medium;

Fig. 5 shows a proposed photodetector;

Figs. 6 and 7 illustrate tracking errors according to a direction of movement of the recording medium;

Fig. 8 shows an apparatus for effecting a tracking error detection method according to an embodiment of the present invention;

Fig. 9 shows the constitution of diffraction gratings, utilized in the apparatus in Fig. 8;

Fig. 10 illustrates the arrangement of spots in the apparatus of Fig. 8;

Fig. 11 shows an arrangement of two diffraction gratings;

Fig. 12 illustrates the distribution of spots on the recording medium;

Fig. 13 illustrates a light intensity ratio between spots;

Figs. 14 and 15 are both cross-sectional views of a rugged surface type and a volumetric type of diffraction gratings;

Figs. 16 to 18 show an integrated type, a multiple layer type, and a multi-recording type of diffraction gratings;

Figs. 19 and 20 illustrate the manufacture of diffraction gratings;

Fig. 21 is a diagram showing another embodiment of an arrangement of diffraction grating;

Fig. 22 is a diagram showing two sheets of diffraction gratings integrated with a prism;

Fig. 23 is a diagram showing a diffraction grating integrated with a beam splitter;

Fig. 24 is a diagram showing variations in spot placement;

Fig. 25 is a diagram showing the relative placement of a photodetector;

2

Fig. 26 is a diagram showing an incomplete state of a tracking error detection method;

Fig. 27 is a diagram showing the relative placement of another embodiment of a photodetector;

Fig. 28 is a diagram showing an apparatus effecting a tracking error detection method as another embodiment of the present invention;

Fig. 29 is a diagram showing a photodetector of the device in Fig. 28;

Figs. 30 and 31 are schematic block diagrams showing an operative circuit of the device in Fig. 28;

Figs. 32 to 34 are diagrams showing each signal display method when detecting a tracking error;

Figs. 35 to 37 are diagrams showing each signal display method when a focusing error is detected;

Figs. 38 and 39 are diagrams showing a detection signal with or without an inclination;

Fig. 40 is a diagram showing a detection signal when a double refraction occurs on the surface of a disk.

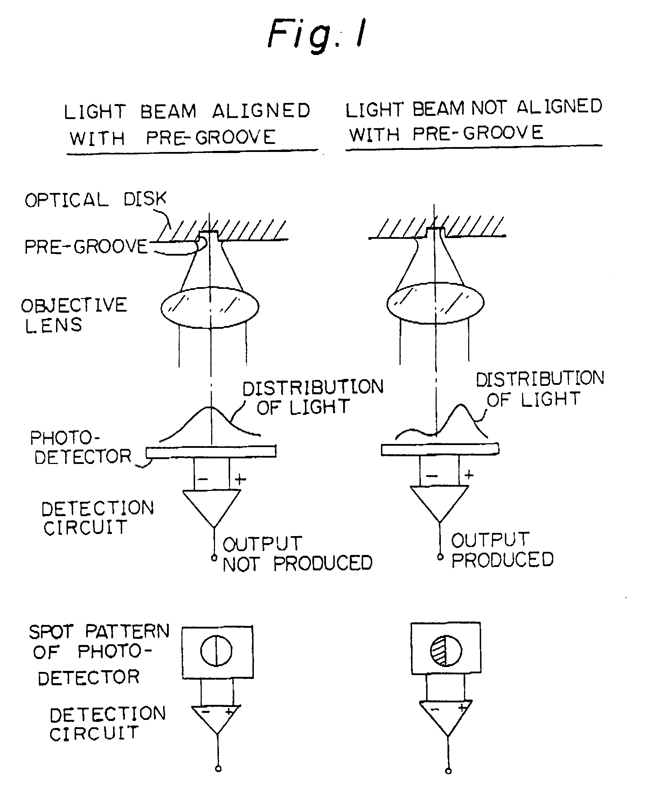

Before describing an embodiment of the present invention, an existing tracking error detection method will be described with reference to Figs. 1 to 7.

A push-pull method for detection of a tracking error previously proposed is illustrated in Fig. 1. In this method, a reflected light from an optical disk is input in a photodetector which is divided into two parts (that is, an upper part and a lower part). The difference between the outputs of each detector is then studied and a method is used to regulate the irradiation position of the spot in order to lessen the above difference. Also, since in the push-pull method, even if there is no track shift, the position of the spots on the photodetector changes when the disk inclines, and it is sometimes erroneously judged that a tracking error has occurred. This dynamic inclination of a disk is referred to as a flat-disk vibrato.

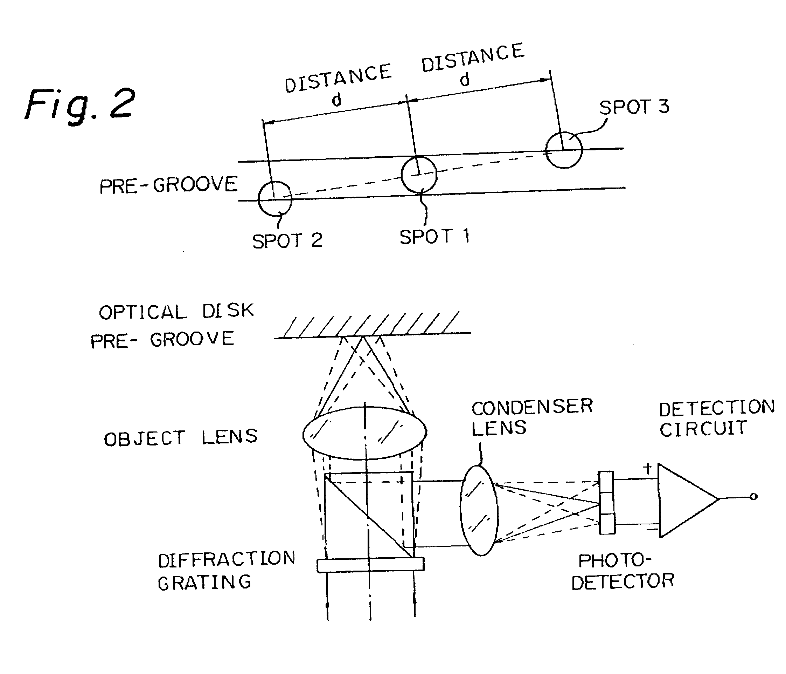

A three-beam method, as shown in Figs. 2 to 7, is utilized as a countermeasure to the occurrence of an inclination of an optical disk in the existing tracking error detection methods.

Figure 2 illustrates a fundamental form and the operation of the three spots in the three-beam method.

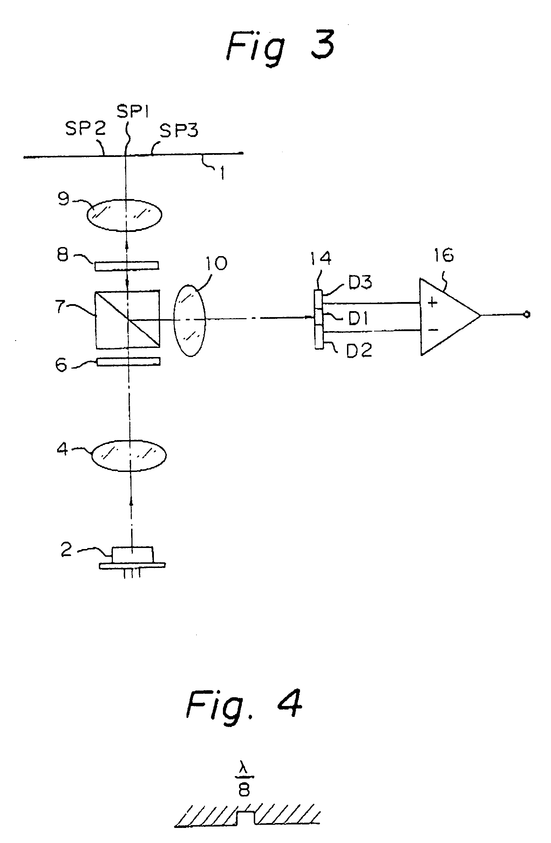

Figures 2 and 3 show a constitution of the device for effecting the three-beam method. In Fig. 3, reference numeral 1 denotes an optical disk, 2 a laser diode LD for generating a laser beam, 4 a collimator lens for obtaining a parallel luminous flux, 6 a plane diffraction grating, 7 a beam splitter, 8 a $\lambda/4$ retardation plate, 9 an objective lens, 10 a condenser lens, 14 a three-section photodetector, and 16 an operational amplifier for a detection circuit. A device incorporating reference numerals 2 to 14 (that is, from a laser diode to a photodetector) is referred to as a photodetector portion. A laser beam from the laser diode 2 is made into a parallel light beam by the collimator lens 4 and via a diffraction grating 6, a polarized beam splitter (PBS) 7, a $\lambda/4$ wavelength plate 8 for effecting a transformation of a circularly polarized light, and an objective lens 9, and the laser beam is then irradiated onto SP1 of a disk medium plate 1 as a first spot. The laser beam passing through the diffraction grating 6 is diffracted and then irradiated onto SP2 and SP3 as a second spot and a third spot on both sides of SP1 on the medium plane 1. In this case, if a shift of the spot to a pre-groove of the medium occurs, problems result as shown in Fig. 4. Light reflected from the SP1, SP2 and SP3 reverts and is then transferred perpendicularly to the reverted light on the reflection plane in the beam splitter 7, to arrive at the positions of D1, D2 and D3 in the photodetector 14 through a condenser lens 10.

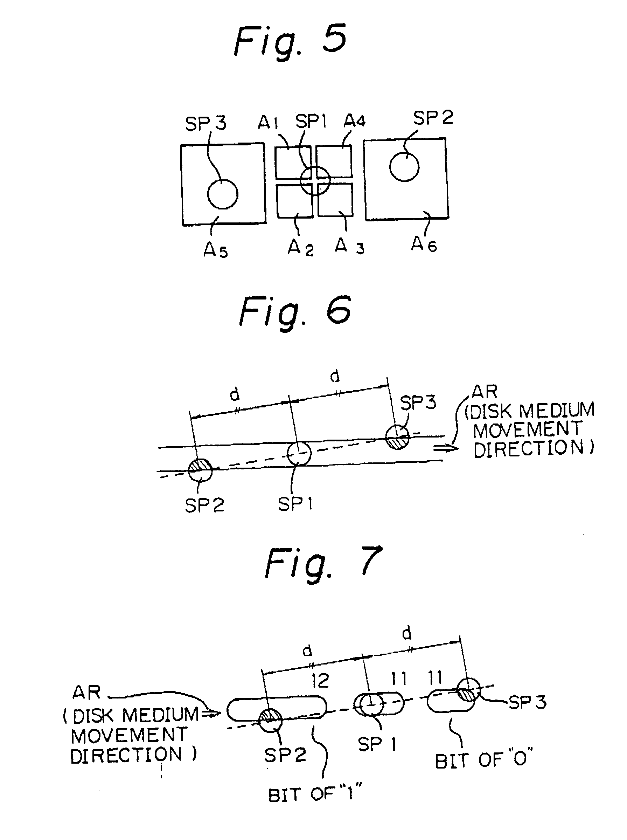

Fig. 5 shows a side elevation of the photodetector 14 where light falls from the upper sides thereon used through a condenser lens 10. In Fig. 5, D1 is used to detect a reflected light from a first spot SP1, D2 that from a second spot SP2, and D3 that from a third spot SP3. D1 denotes a detection portion quartered from A1 to A4, which detects information signals and detects a focusing error using an astigmatism method (In Fig. 3, no optical element is shown for generating astigmatism). A5 and A6 are a second and a third spot detection portions for detecting a tracking error. That is to say, when there is no difference between the detector outputs, it is determined that the first spot between them is present at the center of a track groove or pre-groove, and when there is a difference between the detector outputs, the direction of a shift of a track in relation to the spot is detected, according to whether the difference signal is positive or negative.

Figures 6 and 7 are drawings for explaining a tracking error. Fig. 6 shows a diagram of a Write-Once type of a Phase-Change/Magnetooptics type disk utilizing an optical disk with pre-grooves, and Fig. 7 is a diagram of a disk in which a series of pits are written and which has no pre-groove. In Fig. 6, a main beam SP1 denotes a position where a first spot is irradiated, auxiliary beams SP2 and SP3 separate positions where a second and a third spot are irradiated, AR a transfer direction of an optical disk medium, and PG pre-groove data recorded on a track of the medium 1. An interval of the position where each spot is irradiated is equal to d. The first spot is desired from 0-order transmitted light and the second and third spot on plus or minus primary-order diffracted light. The more than ±2-order diffracted light which is generated when a diffraction grating is employed, is weaker than the transmitted light or the ±1-order diffracted light and is slightly separated, so the detector 14 is so constituted that it cannot detect anything. In Figs. 6 and 7, SP1 is a main spot for writing, reading and erasing information, and when the position of SP2 and SP3 changes, the inputs to the detection portions of A5 and A6 vary, as shown in Fig. 5. Therefore, the outputs

EP 0 330 481 B1

of A5 and A6 are calculated and the position of the objective lens 9 is regulated so that each output of the detection portion has the same value.

Regarding the information, Fig. 6 shows a case in which a series of pits corresponding to the information "0" and "1" are formed. In Fig. 7, reference numeral 11 denotes a pit of, for example, data "0" (that is, a short pit), 12 a pit of data "1" (that is, a long pit), AR a transfer direction of a medium, and d an interval of positions for irradiation between each spot SP1, SP2, and SP3. SP2 and SP3 are arranged on opposite edges of pit 11 and pit 12, respectively. Therefore, the operation of light reflected from the medium being detected by the detector 14 to detect a tracking error, is the same as in Fig. 6.

In the case where the disk medium is of a magnetooptics type, when the configuration of an incident spot in a detector varies just a little due to a minute slant of the disk medium, it does not at all interfere with the detection operation of detecting, as long as the configuration is present in the detection sphere, especially of A5 and A6 in Fig. 5. Thus, the detection operation of the device is not affected.

The tracking error detection method by the three-beam method shown in Figs. 2 to 7 however, necessitates that reflectances from the second and third spots for detecting a tracking error are equal on the groove of the medium. For this reason, for example, in a phase-change type optical disk, when information is being written by the first spot the reflectance differs from the completely written sphere and in the not-yet-written sphere and the tracking error cannot be correctly detected. This also applies to the write-once type of disk. Moreover, there is another problem in the tracking error detection by the three-beam method in that a focusing error can occur.

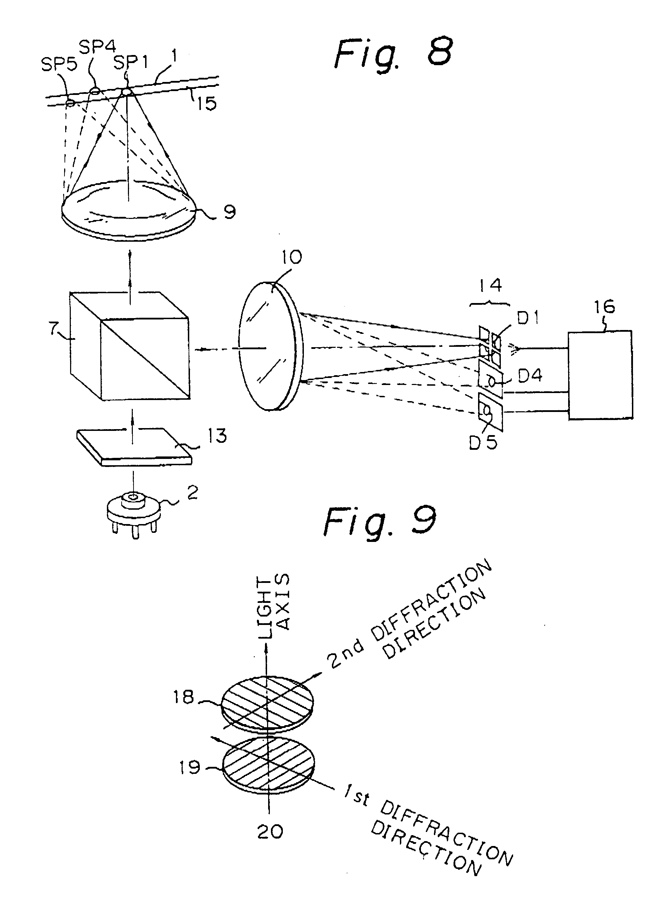

An apparatus for carrying out a tracking error detection method according to an embodiment of the present invention is shown in Fig. 8.

In Fig. 8, reference numeral 1 denotes an optical disk medium, 2 a semiconductor laser, 7 a beam splitter, 9 an objective lens, 10 a condenser lens, 13 a diffraction element formed by two diffraction gratings, 14 a photodetector, 15 a track groove on an optical disk medium and 16 a calculation circuit.

The device of Fig. 8 is constituted as follows. The device includes means for focusing and irradiating the first spot SP1, a disposal means, photodetectors and a calculation circuit.

The means for focusing and irradiating the first spot SP1 comprises a semiconductor laser 2, a diffraction element 13, a beam splitter 7 and an objective lens 9, and focuses and irradiates the first spot SP1 for recording, reproducing and erasing information on an optical disk medium 1.

A diffraction element 13 extends over each stage for separating a groove portion 15 from a non-groove portion. The diffraction element 13 irradiates a first, a second and a third light spots onto an area around the groove track on the recording medium. The first light spot is irradiated onto a groove track as a focused light irradiation for recording, reproducing or erasing information on the groove track of the recording medium. The second and third light spots are irradiated onto an area around the groove track on the recording medium as focused light beams and the second and third light spots are irradiated onto an area around the groove track on one side of the first light spot in such a manner that each of the second and third light spots covers both an inside and outside of the groove track.

The photodetector unit 14 is comprised of three photodetectors D1, D4 and D4 and receives reflected light rays from separate spots SP1, SP4 and SP5. A calculation circuit 16 computes outputs of the photodetector unit 14 to calculate a tracking error.

The structure of the diffraction element 13 utilized for the apparatus of Fig. 8 is shown in Fig. 9. In Fig. 9, two diffraction gratings 18, 19 have different directions of diffraction and 20 denotes a light axis. The two diffraction gratings 18, 19 having different diffraction directions are disposed so as to irradiate the second and third spots.

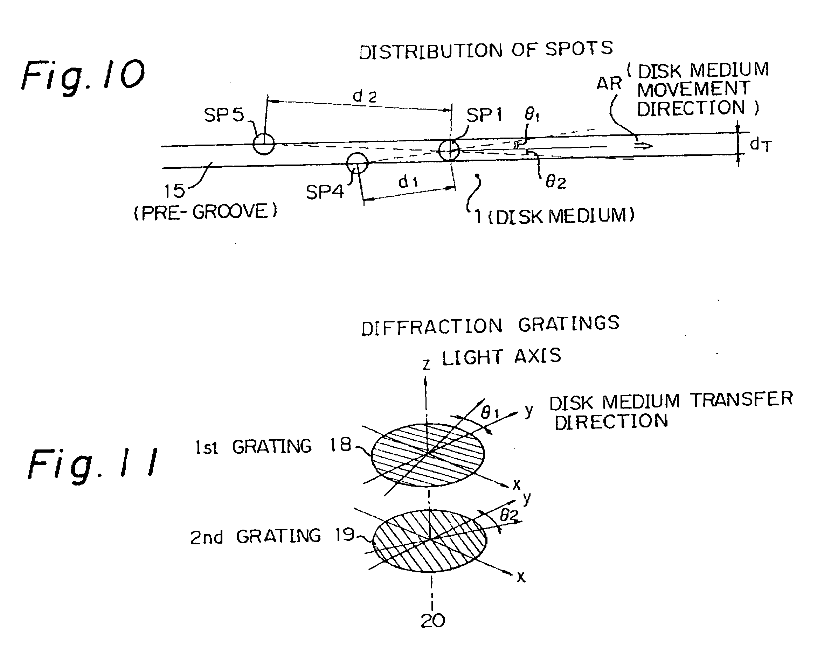

Figure 10 is a diagram showing the arrangement of the spots in the structure of Fig. 8. In Fig. 10, reference numeral 1 denotes an optical disk medium, 15 a track groove or pre-groove of the optical disk medium, and SP4 and SP5 a second spot and a third spot. A laser beam from a semiconductor laser 2 in Fig. 8 is irradiated onto a track groove 15 of the optical disk medium 1 as a first spot SP1. A second spot SP4 and a third spot SP5 which are generated by the diffraction gratings 18, 19 shown in Fig. 9 are disposed to extend over the stage difference between an upper stage and a lower stage of the groove 15. Due to this disposal, when a track position shifts due to eccentricity in the course of rotation of the optical disk medium 1, a malfunction is detected in the photodetector 14 in Fig. 8 which detects the reflected light from a second spot SP4 or a third spot SP5. Then, the output of the photodetector 14 is calculated in the calculation circuit 16, and the position of the spot irradiation means is finely regulated in the propose direction until the difference output is reduced to zero. From this, the first spot SP1 is stabilized at the position where it enters into a track groove 15. Even if the medium 1 is situated in a direction shown as a transfer direction AR (that is, when other spots precede to the first spot) or vice versa, the state remains unchanged. That is, it originates from the fact that even when information is being written by the first spot,

4

EP 0 330 481 B1

the write state and the non-write state are the same. In order to arrange both spots on one side of the first spot as in the second and third spots, two diffraction gratings having different diffraction directions (that is, the direction of grating fringe) will serve this purpose.

In Fig. 10, it is desirable that both the distance $d_1$ from the first spot SP1 to the second spot SP4 and the distance $d_2$ from the first spot SP1 to the third spot SP5 should be made as small as possible up to an extend at which an image of spot can be separated on the photodetector, and the first spot SP1 can be stabilized in an On-track state.

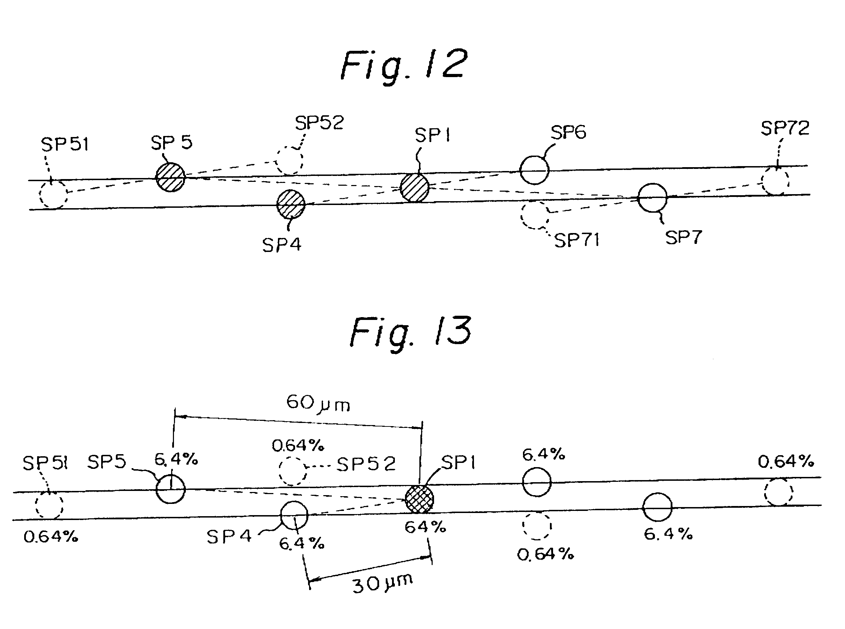

Fig. 12 shows a configuration of each spot. The function of the spots SP1, SP4, and SP5 in Fig. 12 can be explained in the same way as in Fig. 10. That is, a tracking error is detected by spots SP4 and SP5. The detection is effected by the photodetector 14 and in this case, the position of the spot irradiation means is finely controlled so that an error can be cancelled.

Next, referring to Figs. 10 to 12, the operation of the diffraction gratings will be described in detail. Figure 11 is a diagram showing the disposal of two different gratings 18 and 19. The two gratings have different grating pitches, the directions of the grating stripes are shifted in relation to each other and the gratings are set in a luminous flux of a laser beam. If the angles $\theta_1$ and $\theta_2$ which indicate a direction perpendicular to the grating stripes and a medium transfer direction AR (a direction of the track groove) form there between are illustrated responsive to Fig. 10, the angles are shown with the width of a track groove $d_T$ and the intervals of spots $d_1$ , $d_2$ by the following relational expression.

$$\theta_1 = \sin^{-1}(d_T/2d_1)$$
$$\theta_2 = \sin^{-1}(d_T/2d_2)$$

If the pitches of the grating stripes are 47 $\mu$m and 94 $\mu$m, respectively, the wavelength is 830 nm, and the focal distance of an objective lens f is 3.4 mm, a reflected angle of ±1-order diffracted light is multiplated by the focal distance $\underline{f}$ to obtain the spot interval $d_1$ and $d_2$ as follows.
viz.,

$$d_1 \fallingdotseq 30 \ \mu m$$
$$d_2 \fallingdotseq 60 \ \mu m$$

In fact, based on the light diffracted by two diffraction gratings, a number of spots are distributed on the disk medium. Figure 12 is a diagram showing spots distributed on the medium. As shown in Fig. 11, when the laser beam enters in a grating 18 after passing through a grating 19, gratings by the 0-order passage of the laser beam through both gratings, the first spot SP1 is produced. The spots SP1, SP5 and SP7 caused by the diffraction grating 19 and these spots develop the ±1-order light produced by the diffraction grating 18 to generate a number of spots SP4, SP6, SP51, SP52, SP71, and SP72. The spots which are used for detecting a tracking error are a combination of SP4 and SP5 or a combination of SP6 and SP7.

Both diffraction gratings 18 and 19 are made to be a value such that the 0-order transmittance of the vertical incidental ray may be some 80% and the ±1-order diffraction efficiency is some 8%. Accordingly, the ratio of the intensity of nine spot light rays or the ratio of the quantity of light attains the values as shown in Fig. 13. If the ratio of the incident light to a diffraction grating is 100%, for example, when the first spot SP1 is produced by two diffraction gratings, it is equal to 80% x 80% = 64%.

There are four spot components that are diffracted by either of the diffraction gratings, with one diffracting grating diffracting and the other transmitting, with an efficiency equal to
80% x 8% = 6.4%

There are also four components that are diffracted by each of the two diffraction gratings with an efficiency equal to
8% x 8% = 0.64%

Since the components of a higher order of diffracted light more than ±2-order becomes much lower, the value can be neglected.

The ratio of the intensity of light in the first spots SP1 versus the spots SP4 and SP5 for detecting a tracking error is 10 to 1, and the latter does not affect the recording operation of the former.

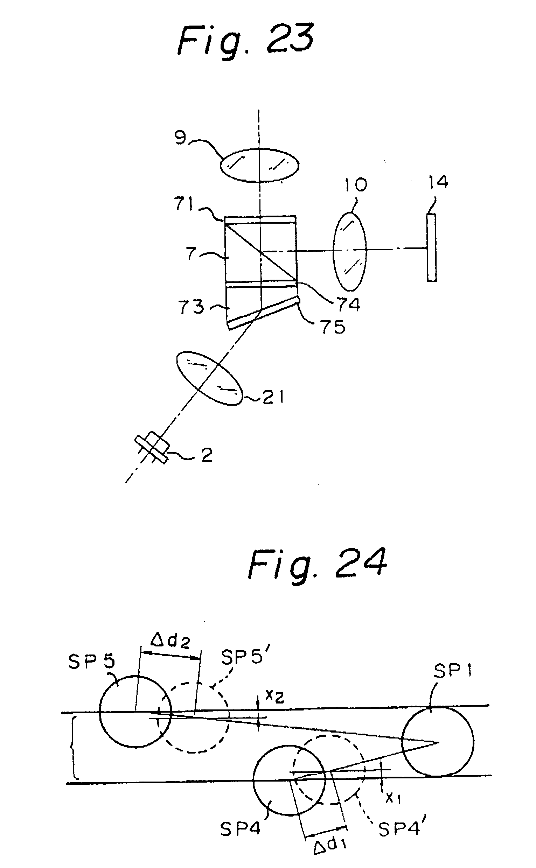

Fig. 24 is a diagram showing the variation of a spot position when the wavelength of the laser beam changes due to a change of atmosphere temperature. A semiconductor laser is used in order to generate a laser beam. It is known that, if a single mode of a laser beam is being generated, when atmospheric temperature and driving current change, the wavelength of the laser beam to be generated changes correspondingly. Since a diffracted light due to a diffraction grating is employed for the purpose of the spot for detecting a tracking error, the position for irradiating a spot changes corresponding to the change of

5

wavelength.

In Fig. 24, a circle indicated by a solid line shows the position of a normal wavelength of a first spot SP1 to a third spot SP5 and circles SP4′ and SP5′ indicated by a broken line show each spot position when the wavelength becomes shorter. When an original wavelength changes, for example, the variation is $\Delta\lambda$ (< 0) and a respective shift value of the spots is $\Delta d_1$ and $\Delta d_2$. The detection of a tracking error corresponds to the calculation of the difference signal between the outputs of the photodetectors responsive to the spots SP4 and SP5, so it is necessary to take into amount the relationship between $\Delta X_1$ and $\Delta X_2$ when the wavelength changes. In this case, it is necessary to prove the relationship

$$\Delta X1_1 \ = \ \Delta X_2$$

Calculate the relationship or Fig. 12.

$$\frac{\Delta x_1}{d_T/2} = \frac{\Delta d_1}{d_1} \qquad \cdots (1)$$

$$\frac{\Delta x_2}{d_T/2} = \frac{\Delta d_2}{d_2} \qquad \cdots (2)$$

Suppose that a diffraction angle by means of a diffraction grating is $\theta$, the spot intervals $d_1$ and $d_2$ are proportional to $\tan\theta$. As $\theta$ is sufficiently small, it may be considered that $d_1$ or $d_2 \propto \theta$.

On the other hand, suppose that a spatial frequency (a reciprocal of a pitch) of the diffraction grating is f, it then holds that the relationship for a 1-order diffraction light is

$$\sin\theta \fallingdotseq f \cdot \lambda \qquad (3)$$

Also, since $\theta$ is small, suppose that

$$\sin\theta \fallingdotseq \theta,$$

we then obtain

$$\theta \propto \lambda.$$

That is, since $d_1$ or $d_2 \propto \lambda$, the following relationship holds.

$$\frac{\Delta d_1}{d_1} \propto \frac{\Delta\lambda}{\lambda} \qquad \cdots (4)$$

$$\frac{\Delta d_2}{d_2} \propto \frac{\Delta\lambda}{\lambda} \qquad \cdots (5)$$

From the above expression, even if there is a change of wavelength, $\Delta x_1 = \Delta x_2$ is derived. This is true with $\Delta\lambda > 0$. Thus, a desirable result is obtained.

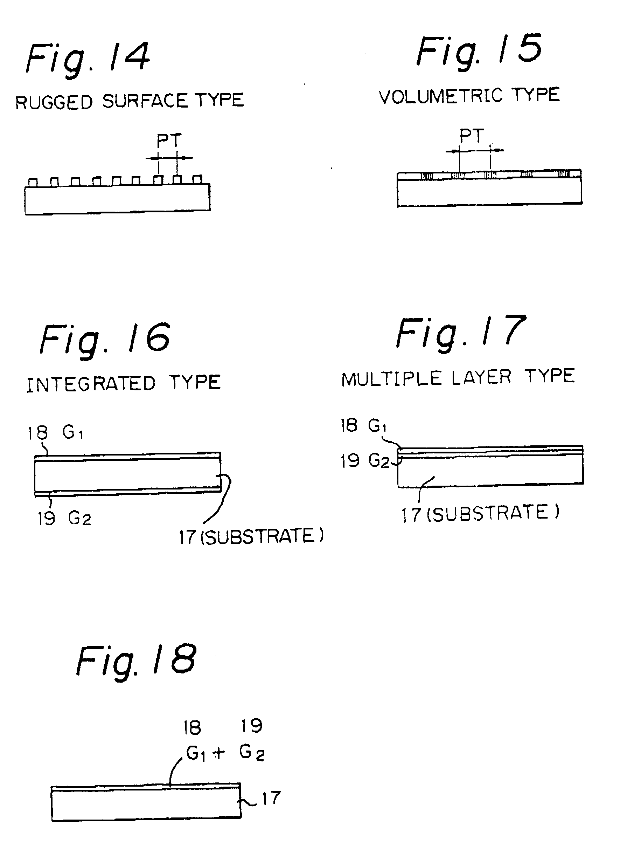

A concrete structure will be described in which two diffraction gratings are disposed. Figs. 14 and 15 are cross-sectional views showing different kinds of diffraction gratings. In the figures, a plane diffraction grating is shown in which the stripes of the diffraction grating are straight and the pitches PT are equal to each other over the whole grating. Fig. 14 shows sectional diagram of a diffraction grating in which a striped pattern is applied to a rugged surface type, and Fig. 15 is a sectional diagram showing a volumetric type or a refractive index-change type. Figs. 16 to 18 show two types of diffraction gratings.

Fig. 16 is a diffraction grating in which two types of grating 18, 19 are attached to both sides of a substrate 17. This is used for both a rugged surface type and a volumetric type grating. Fig. 17 shows a multi-layer structure in which diffraction gratings are laminated on one side of a substrate 17 which is then used as a volumetric type. Fig. 18 shows a multi-recording diffraction grating which has the functions of two kinds of diffraction gratings on one film of substrate.

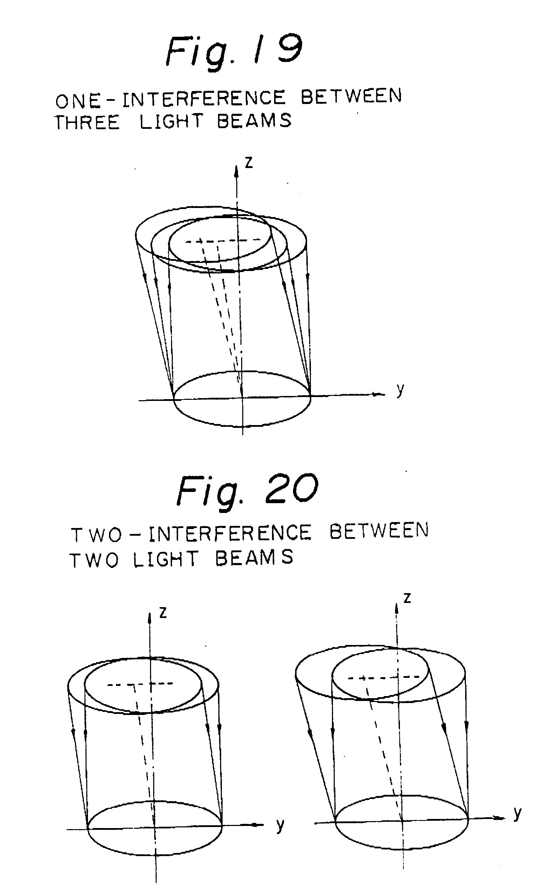

A method of making a multi-recording diffraction grating is illustrated in Figs. 19 and 20. In Fig. 19, three coherent plane waves are interfered with to form interference fringes or effect an electron beam exposure method, for the purpose of providing a part of a vertical incident plane wave to the diffraction grating with a special function of diffracting in two different directions. In Fig. 20, the interference exposure of two coherent plane waves is carried out twice to form interference fringes or effect an electron beam exposure method.

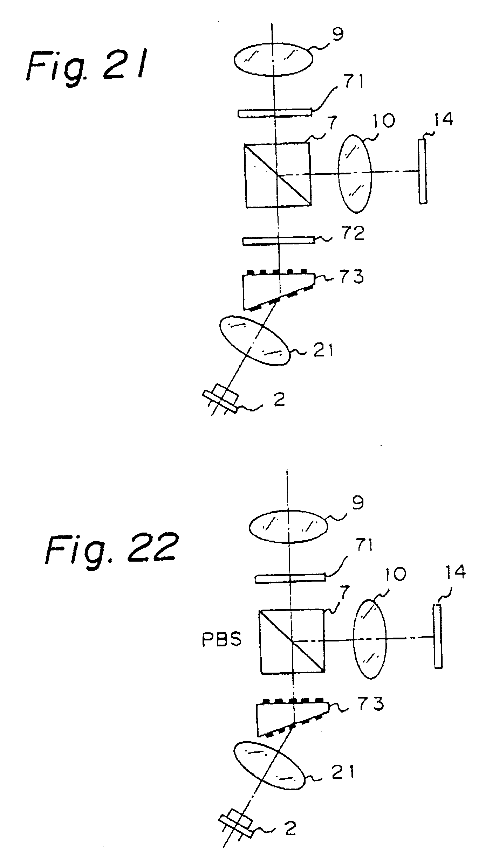

Figures 21 and 22 show another embodiment of a disposal (arrangement) of a diffraction grating.

In Fig. 22, two diffraction gratings are disposed at the medium side 1 and at the laser source side of a beam shaping prism 73 which is used as a prism as shown in Fig. 21, and the rugged surface prism in Fig. 16 is utilized to transform all elliptical beam into a circular one. For example, resist is employed to form the diffraction grating by means of an electron beam direct picturing method. Since the diffraction grating is arranged on both sides of the beam shaping prism in a path of a laser beam, a dimensional increase of the optical system due to the integration of the diffraction grating can be neglected.

Figure 23 is a diagram showing another embodiment of the disposal of the diffraction grating, which illustrates the incorporation of a beam shaping prism 73 and a beam splitter 7. In this embodiment, the prism 73 and the beam splitter 7 are combined to incorporate the diffraction gratings 74 and 75 forming a volumetric type grating. The volumetric diffraction grating is formed by, for example, polyvinyl carbazol (PVCz), which is a material of good transparency and of small transmission loss, thus enabling a more miniaturized structure of an optical head.

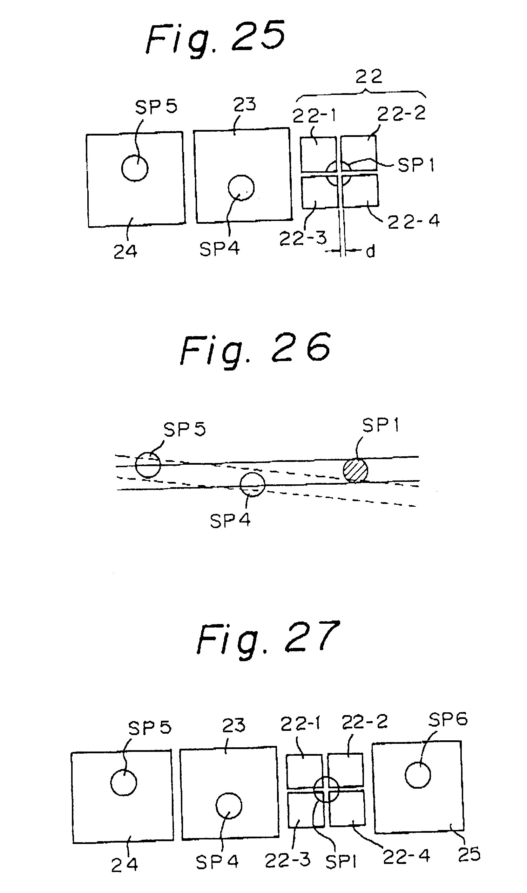

A photodetector will be described with reference to Fig. 25, which is a diagram showing a positional relationship of a photodetector 14 shown in Fig. 8.

In Fig. 25, reference numeral 22 denotes a photodetector for a first spot. A solid circle in each photodetector illustrates an irradiation from a corresponding spot. The photodetector 22 for the first spot is divided into four parts 22-1 to 22-4, each part is a perfect square having 100 to 300 $\mu$m sides and is arranged at an interval of some 10 $\mu$m. The tracking error detector 23 and 24 lie one one side of the first spot photodetector 22, that is, on the left side of Fig. 25, each side being 200 to 600 $\mu$m and forming a perfect square. The photodetector 14 is formed by a six-divided PIN photodiode. Another embodiment of the photodetector is shown in Fig. 27, which is shown in Fig. 26.

Fig. 26 is a diagram explaining an extreme case where a tracking error in the present invention is detected imperfectly. In Fig. 26, spots SP1, SP4 and SP5 are the same as shown in Fig. 8 and the position of a spot shown by a solid line is normal, but the relational position with a groove as shown by a broken line may change in some cases. For this reason, the output difference signals from the second and third spots are zero, but the first spot cannot irradiate at a normal position. Therefore, another method is investigated which utilizes the fourth spot SP6 as shown in Fig. 12.

In response to a spot SP6 which relates to the ±one-order diffracted light and is essentially unnecessary to the second spot SP4, another photodetector is added on the reverse side with the photodetector for the second spot as shown in Fig. 27. In the first setup of the status, three photodetector 22, 23, 25 are utilized and supposing that the optical disk medium is not yet recorded on or has been already recorded on, as long as the second and the fourth spots are in the same state, the diffraction grating are adjusted, that is, it is necessary to adjust such that the output of the photodetector 23 is the same as that of the photodetector 25 and the output of the photodetector 23 will be the same as that of the photodetector 24.

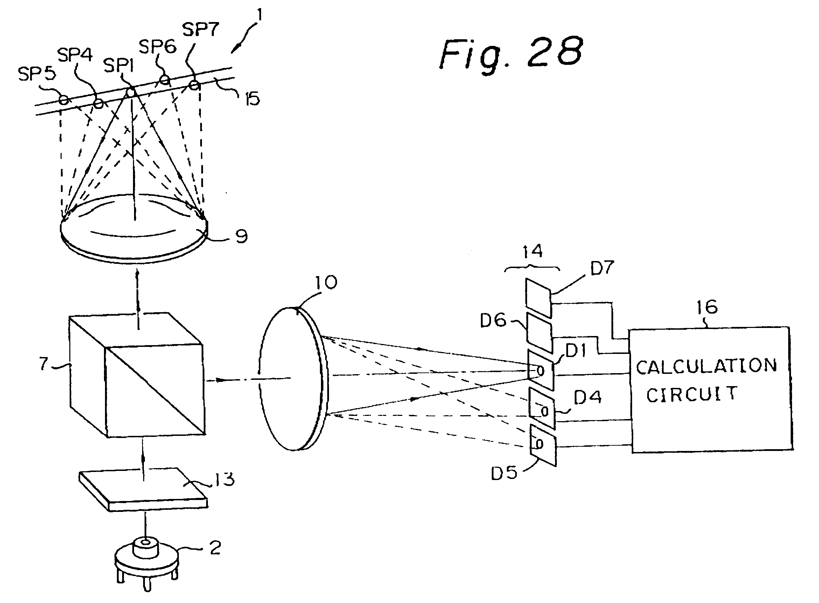

The device for effecting a detection method of a tracking error and a focusing error as still another embodiment in accordance with the present invention will be described with reference to Figs. 28 to 40. In the device of Fig. 28, a tracking error is detected by spots SP4 and SP5 and a focusing error is detected by spots SP6 and SP7. On the contrary, spots SP4 and SP5 may be utilized for the detection of a focusing error and spots SP6 and SP7 for the detection of a tracking error.

In Fig. 28, reference numeral 1 denotes an optical disk, 2 a semiconductor laser, 7 a beam splitter, 9 an objective lens, 10 a condenser lens, 13 a diffraction element formed by two sheets of diffraction gratings, 15 a track groove, 14 a photodetector and 31 a calculation circuit.

The device of Fig. 28 has the following constitution. That is, the device includes:

means (1, 13, 7, 9) for focusing and irradiating a first spot SP1 for the purpose of recording, reproducing and erasing information on an optical disk medium;

a disposal means 13 for irradiating a second spot SP4 and a third spot SP5 as a first group and a fourth spot SP6 and a fifth spot SP7 as a second group, onto a groove track on the recording medium as focused light beams simultaneously with said irradiation of the first spot SP1, said second to fifth spots being irradiated onto the groove track in such a manner that the spot belonging to either group is irradiated on the same side of the first light spot SP1, that the groove portion and the non-groove portion are discriminated, that the focused spot and the non-focused spot are discriminated, and that each of the second to fifth spots covers both an inside and outside of the groove track;

five photodetectors 14 for receiving reflected light beams from each of spots SP1 and SP4 to SP7; and

a calculation circuit 31 for calculating each output of the photodetector 14 and computing a tracking error and a focusing error.

The diffraction grating element 13 as a spot disposal means as shown in Fig. 9, is disposed to include two different sheets of diffraction gratings 18 and 19 to generate a light spot.

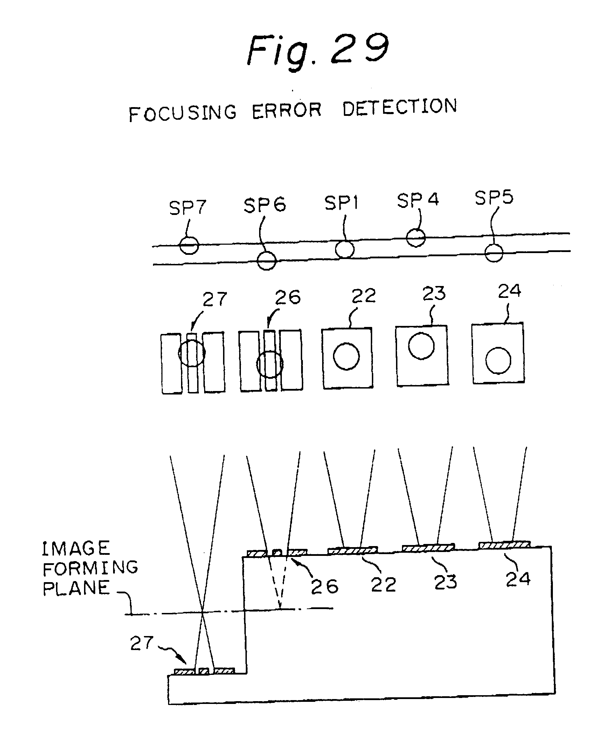

The constitution and operation of the device in Fig. 28 will be described in reference to Figs. 29 to 40.

Figure 29 shows an arrangement of a photodetector 14 and spots. The top portion of Fig. 29 shows the disposal of spots on the track groove of an optical disk, the middle portion of Fig. 29 a top view diagram of the disposal of the photodetector and the lower portion of Fig. 29 a side view diagram of the photodetector.

In the top portion of Fig. 29, SP1 denotes a first spot for recording and reproducing information, SP4 and SP5 denote a second spot and a third spot for detecting a tracking error which spots are obtained by a ( + ) 1-order light passing through a respective diffraction grating. SP6 and SP7 denote a fourth spot and a fifth spot for detecting a focusing error which spots are also obtained by a (-) 1-order light. In the middle portion of Fig. 29, reference numeral 23 and 24 denote photodetectors for detecting a tracking error, the position of spots shifting in response to both sides of the track groove, 26 and 27 are photodetectors for detecting a focusing error each being divided into three parts in a direction of the track groove, and 22 is a photodetector for a first spot which is not divided. In the lower portion of Fig. 29, 26 and 27 make the position of spots differ upward and downward in the direction of light irradiation. That is, 26 lies in the same plane as the other photodetectors 22, 23 and 24, and 27 is disposed at the position in which the same dimension of beam radius as the photodetector 26 is obtained, after a focusing beam once forms an image.

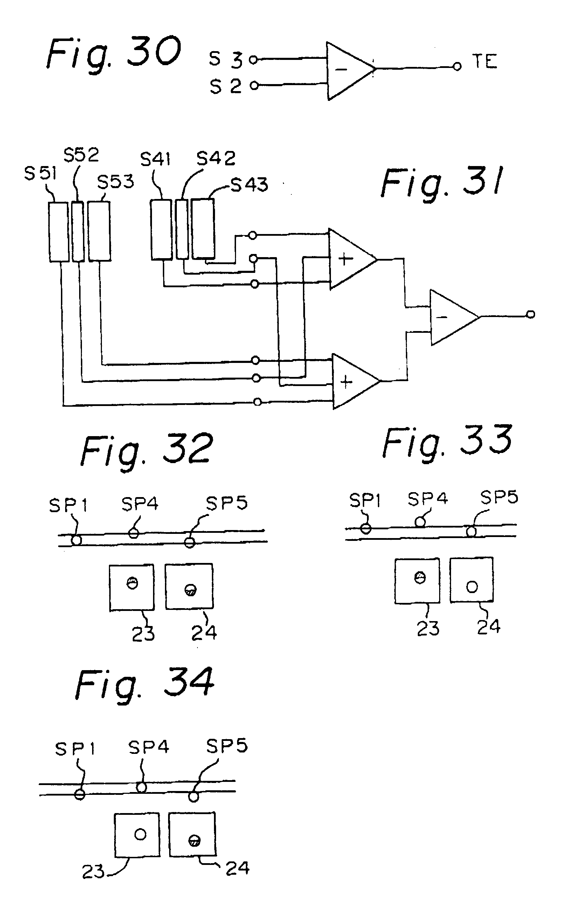

Figures 30 and 31 are diagrams showing a concrete constitution of a calculating circuit 31 shown in the device of Fig. 28. Fig. 30 is a subtraction circuit for obtaining the difference signal for detecting a tracking error TE, and its operational expression is indicated as follows.

$$TE = S2 - S3,$$

where S2 denotes the output of the photodetector 23 for a second spot and S3 the output of the photodetector 24 for a third spot.

Figure 31 is a detection circuit for detecting a focusing error FE, S41 to S43 denote the output of the photodetector 26 for a fourth spot and S51 to S53 the output of the photodetector 27 for a fifth spot. A sum signal of S41, S52 and S43 and a sum signal of S51, S42 and S53 are obtained with regard to the outputs of each divided photodetector, then a remote and near state of focusing on the surface of the optical disk from the above two difference signals are detected. An operational expression of the focusing error FE is indicated as follows.

$$FE = (S41 + S52 + S43) - (S51 + S42 + S53)$$

Figs. 32 to 34 show the signals of detectors 23 and 24 when the tracking error is detected. In Fig. 32, as spots SP1, SP4 and SP5 are found normally on the track groove, the amount of each dark portion of the spot in the detectors 23 and 24 is the same. In Figs. 33 and 34, as each spot is not found on the track groove, each dark part is different, and the direction of the tracking error can be discriminated by the calculating circuit.

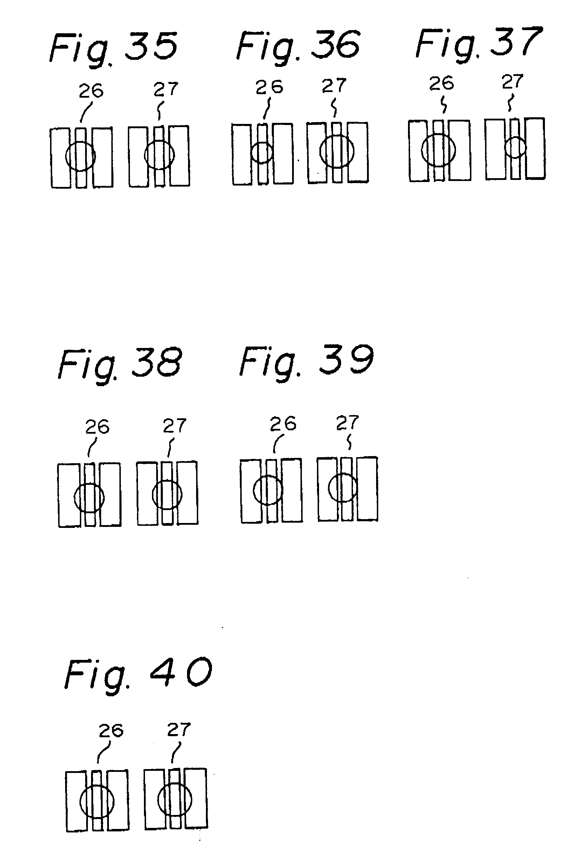

Figures 35 to 37 are diagrams showing the signals of detectors 26 and 27 when a focusing error is detected. Fig. 35 shows that S41 and S51, S42 and S52, and S43 and S53 are equal to each other and the focal point fits perfectly. When the optical disk comes close to a light source, as shown in Fig. 36, since the focal point of the signal light is prolonged, the beam radius entering the detector after image-formation is small and the beam radius before image-formation is large. For this reason, if a calculation is effected by the calculation circuit, it is seen that the result is not zero, but the occurence of a focusing error is detected.

Fig. 37 shows a case where the optical disk is apart from the light source and is in a reverse state from the case of Fig. 36.

Figure 38 and 38 are diagrams showing a change of luminous energy of the photodetector when a flat-disk vibrato occurs. Fig. 38 shows a case where the flat-disk vibrato does not occur, and is the same as in Fig. 35. Fig. 39 shows a case where the position of spots entering each detector changes, as the flat-disk vibrato occurs. In this case, since the luminous energy of S41 and S51, S42 and S52, and S43 and S53 are equal to each other, when the calculation is carried out by the calculation circuit shown in Fig. 31, the result is zero due to the cancelation of the difference, and the focusing error is not recognized.

Next a case where the birefringence of a glass layer for protecting the optical disk should be taken into account will be described. In Fig. 40, it is shown that a partial birefringence is found in a part of a substrate of the optical disk and the spot on the photodetector of Fig. 22 where a port of the signal light is darkened, (at the part of a dark point) is illustrated. In this case, the dark positions of the signal light which after image-formation and before image-formation, enters into the photodetector, are symmetrical. Therefore, due to the calculation by the circuit shown in Fig. 31 the dark points are cancelled, and the focusing error which originated from the birefringence does not occur.

## Claims

1. An apparatus for detecting a tracking error during a process for tracing a groove track (15) on a recording medium (1), comprising:-

   a light source (2) for producing light used to generate first (SP1), second (SP4) and third (SP5) light spots to be irradiated onto the recording medium;

   diffracting means (13) for producing said first, second and third light beams, comprising a plurality of planar diffraction gratings (18, 19), having different grating pitches and grating directions differing from each other by a predetermined angle;

   irradiation means (9) for generating, based on the first, second and third light beams, said first, second and third light spots and for irradiating said light spots onto an area around the groove track (15) on the recording medium, said first light spot being irradiated as a focused light emission onto the groove track for recording, reproducing or erasing information on the groove track of the recording medium, said second and third light spots being irradiated onto an area around the groove track on the recording medium as focused light beams for generating a tracking error signal;

   a plurality of photodetectors (14) for detecting reflected light beams of said first, second and third light spots reflected from the recording medium;

   calculation means (16) for determining said tracking error signal based on the detecting result of said photodetectors, the apparatus being characterized in that a transparent substrate (17) is incorporated with said planar diffraction gratings and in that said second and third light spots are irradiated on one side of said first light spot in such a manner that each of said second and third light spots covers both an inside and outside of the groove track.

2. An apparatus for detecting a tracking error according to claim 1, further comprising a prism (73) and a light beam splitter (7), and wherein said diffracting means (13) and said prism (73) are arranged between said light source (2) and said light beam splitter (7).

3. An apparatus for detecting a tracking error according to claim 1 or 2, wherein said photodetectors (14) comprise a first photodetector (22) for receiving reflection light reflected from said first light spot (SP1), and serially arranged second (23) and third (24) photodetectors for receiving reflection light reflected from said second (SP4) and third (SP5) light spots, respectively.

4. An apparatus for detecting a tracking error according to claim 3, wherein said photodetectors (14) further include a fourth photodetector (25) arranged symmetrically to the second (23) or third photodetector (24) with regard to the first photodetector (22), and wherein the apparatus further includes means for adjusting said diffracting means (13) by outputs of said first to fourth photodetectors.

5. An apparatus for detecting a tracking error according to any preceding claim, wherein said diffracting means (13) generates either said second light beam or said third light beam having diffracted light of a +1 order.

6. A method for detecting a tracking error (TE) and a focusing error (FE) in a process of tracing a groove track (15) on a recording medium (1) comprising the steps of:-

(a) irradiating a first light spot (SP1) onto the groove track on the recording medium as a focused light beam for recording, reproducing or erasing information on the groove track of the recording medium;

(b) irradiating second (SP4) and third light spots (SP5) as a first light spot group onto an area around the groove track on the recording medium as focused light beams simultaneously with step (a) for generating a tracking error signal;

(c) optically detecting by a plurality of photodetectors (22 - 24) reflections of said first to third light spots reflected from the recording medium, and

(d) obtaining a tracking error signal in a process of tracing the groove track by a calculation using the results of said optical detection by said photodetectors (22 - 24), the method being characterized by

(e) irradiating a fourth (SP6) and fifth light spots (SP7) as a second light spot group, onto an area around the groove track onto the recording medium as focused light beams simultaneously with step (a) for generating a focusing error signal, said second to fifth light spots being irradiated in such a manner that the spot belonging to either of said groups is irradiated on one side of said first light spot, that the groove portion and the non-groove portion are discriminated, that the focused light spot and the non-focused light spot are discriminated, and that each of said second to fifth light spots covers both an inside and outside of said groove track;

(f) optically detecting by a plurality of photodetectors (26, 27) reflections of said fourth and fifth light spots reflected from the recording medium, and

(g) obtaining a focusing error signal in a process of tracing the groove track by calculation using the results of said optical detection by said photodetectors (26, 27).

7. A method according to claim 6, wherein said second (SP4) and third light light spots (SP5) have diffracted light of a +1 order for detecting a tracking error, and said fourth (SP6) and fifth light spots (SP7) have diffracted light of a -1 order for detecting a focusing error.

**Patentansprüche**

1. Eine Vorrichtung zum Detektieren eines Spurfehlers während eines Vorgangs zum Verfolgen einer Rillenspur (15) auf einem Aufzeichnungsmedium (1), die umfaßt:-

eine Lichtquelle (2) zum Erzeugen von Licht, das verwendet wird, um erste (SP1), zweite (SP4) und dritte (SP5) Lichtpunkte zu erzeugen, die auf das Aufzeichnungsmedium einzustrahlen sind;

ein Beugungsmittel (13) zum Erzeugen der genannten ersten, zweiten und dritten Lichtstrahlen, das eine Vielzahl von ebenen Beugungsgittern (18, 19) umfaßt, die verschiedene Gitterraster und Gitterrichtungen haben, die sich voneinander durch einen vorbestimmten Winkel unterscheiden;

ein Einstrahlmittel (9) zum Erzeugen der genannten ersten, zweiten und dritten Lichtpunkte, auf der Grundlage der ersten, zweiten und dritten Lichtstrahlen, und zum Einstrahlen der genannten Lichtpunkte auf einen Bereich um die Rillenspur (15) auf dem Aufzeichnungsmedium, wobei der genannte erste Lichtpunkt als fokussierte Lichtemission auf die Rillenspur zum Aufzeichnen, Wiedergeben oder Löschen von Informationen auf der Rillenspur des Aufzeichnungsmediums eingestrahlt wird, die genannten zweiten und dritten Lichtpunkte auf einen Bereich um die Rillenspur auf dem Aufzeichnungsmedium als fokussierte Lichtstrahlen zum Erzeugen eines Spurfehlersignals eingestrahlt werden;

eine Vielzahl von Fotodetektoren (14) zum Detektieren von reflektierten Lichtstrahlen der genannten ersten, zweiten und dritten Lichtpunkte, die von dem Aufzeichnungsmedium reflektiert wurden;

ein Berechnungsmittel (16) zum Ermitteln des genannten Spurfehlersignals auf der Grundlage des Detektionsresultats der genannten Fotodetektoren, welche Vorrichtung dadurch gekennzeichnet ist, daß

ein transparentes Substrat (17) in den genannten ebenen Beugungsgittern enthalten ist, und daß die genannten zweiten und dritten Lichtpunkte auf eine Seite des genannten ersten Lichtpunktes auf solch eine Weise eingestrahlt werden, daß jeder der genannten zweiten und dritten Lichtpunkte sowohl eine Innenseite als auch eine Außenseite der Rillenspur bedeckt.

2. Eine Vorrichtung zum Detektieren eines Spurfehlers nach Anspruch 1, die ferner ein Prisma (73) und einen Lichtstrahlenteiler (7) umfaßt, und bei der das genannte Beugungsmittel (13) und das genannte Prisma (73) zwischen der genannten Lichtquelle (2) und dem genannten Lichtstrahlenteiler (7) angeordnet sind.

10

**3.** Eine Vorrichtung zum Detektieren eines Spurfehlers nach Anspruch 1 oder 2, bei der die genannten Fotodetektoren (14) einen ersten Fotodetektor (22) zum Empfangen von Reflexionslicht umfassen, das von dem genannten ersten Lichtpunkt (SP1) reflektiert wurde, und seriell angeordnete zweite (23) und dritte (24) Fotodetektoren zum Empfangen von Reflexionslicht, das von den genannten zweiten (SP4) bzw. dritten (SP5) Lichtpunkten reflektiert wurde.

**4.** Eine Vorrichtung zum Detektieren eines Spurfehlers nach Anspruch 3, bei der die genannten Fotodetektoren (14) ferner einen vierten Fotodetektor (25) enthalten, der zu dem genannten zweiten (23) oder dritten Fotodetektor (24) bezüglich des ersten Fotodetektors (22) symmetrisch angeordnet ist, und welche Vorrichtung ferner Mittel zum Einstellen des genannten Beugungsmittels (13) durch Ausgaben der genannten ersten bis vierten Fotodetektoren enthält.

**5.** Eine Vorrichtung zum Detektieren eines Spurfehlers nach irgendeinem vorhergehenden Anspruch, bei der das genannte Beugungsmittel (13) entweder den genannten zweiten Lichtstrahl oder den genannten dritten Lichtstrahl erzeugt, die gebeugtes Licht +1. Ordnung haben.

**6.** Ein Verfahren zum Detektieren eines Spurfehlers (TE) und eines Fokussierfehlers (FE) bei einem Vorgang zum Verfolgen einer Rillenspur (15) auf einem Aufzeichnungsmedium (1) mit den Schritten:-
(a) Einstrahlen eines ersten Lichtpunktes (SP1) auf die Rillenspur auf dem Aufzeichnungsmedium als fokussierter Lichtstrahl zum Aufzeichnen, Wiedergeben oder Löschen von Informationen auf der Rillenspur des Aufzeichnungsmediums;
(b) Einstrahlen von zweiten (SP4) und dritten Lichtpunkten (SP5) als erste Lichtpunktgruppe auf einen Bereich um die Rillenspur auf dem Aufzeichnungsmedium als fokussierte Lichtstrahlen gleichzeitig mit Schritt (a) zum Erzeugen eines Spurfehlersignals;
(c) optisches Detektieren durch eine Vielzahl von Fotodetektoren (22-24), von Reflexionen der genannten ersten bis dritten Lichtpunkte, die von dem Aufzeichnungsmedium reflektiert wurden, und
(d) Erhalten eines Spurfehlersignals bei einem Verfahren zum Verfolgen der Rillenspur durch eine Berechnung unter Verwendung der Resultate der genannten optischen Detektion durch die genannten Fotodetektoren (22-24), welches Verfahren gekennzeichnet ist durch
(e) Einstrahlen von vierten (SP6) und fünften Lichtpunkten (SP7) als zweite Lichtpunktgruppe auf einen Bereich um die Rillenspur auf dem Aufzeichnungsmedium als fokussierte Lichtstrahlen gleichzeitig mit Schritt (a) zum Erzeugen eines Fokussierfehlersignals, welche zweiten bis fünften Lichtpunkte auf solch eine Weise eingestrahlt werden, daß der Punkt, der zu einer der genannten beiden Gruppen gehört, auf eine Seite des genannten ersten Lichtpunktes eingestrahlt wird, daß der Rillenteil und der Nichtrillenteil unterschieden werden, daß der fokussierte Lichtpunkt und der nichtfokussierte Lichtpunkt unterschieden werden, und daß jeder der genannten zweiten bis fünften Lichtpunkte sowohl eine Innenseite als auch eine Außenseite der genannten Rillenspur bedeckt;
(f) optisches Detektieren durch eine Vielzahl von Fotodetektoren (26, 27), von Reflexionen der genannten vierten und fünften Lichtpunkte, die von dem Aufzeichnungsmedium reflektiert wurden, und
(g) Erhalten eines Fokussierfehlersignals bei einem Vorgang zum Verfolgen der Rillenspur durch Berechnung unter Verwendung der Resultate der genannten optischen Detektion durch die genannten Fotodetektoren (26, 27).

**7.** Ein Verfahren nach Anspruch 6, bei dem die genannten zweiten (SP4) und dritten Lichtpunkte (SP5) gebeugtes Licht +1. Ordnung zum Detektieren eines Spurfehlers haben, und die genannten vierten (SP6) und fünften Lichtpunkte (SP7) gebeugtes Licht -1. Ordnung zum Detektieren eines Fokussierfehlers haben.

**Revendications**

**1.** Appareil de détection d'une erreur de poursuite au cours d'une opération de poursuite d'une piste (15) d'un sillon formé sur un support d'enregistrement (1), comprenant :
une source lumineuse (2) destinée à produire de la lumière utilisée pour la création d'une première (SP1), d'une seconde (SP4) et d'une troisième (SP5) tache lumineuse destinées à être projetées sur le support d'enregistrement,
un dispositif de diffraction (13) destiné à produire le premier, le second et le troisième faisceau lumineux et comprenant plusieurs réseaux plans de diffraction (18, 19) ayant des pas de réseaux et des directions de réseaux qui sont différents d'un angle prédéterminé,

un dispositif (9) d'irradiation destiné à créer, d'après le premier, le second et le troisième faisceau lumineux, la première, la seconde et la troisième tache lumineuse et à projeter les taches dans une zone entourant la piste (15) du sillon formé sur le support d'enregistrement, la première tache étant projetée comme émission lumineuse focalisée sur la piste du sillon pour l'enregistrement, la lecture ou l'effacement d'informations sur la piste du sillon du support d'enregistrement, la seconde et la troisième tache lumineuse étant projetées sur une zone entourant la piste du sillon sur le support d'enregistrement sous forme de faisceaux lumineux focalisés, pour la création d'un signal d'erreur de poursuite,

plusieurs photodétecteurs (14) destinés à détecter les faisceaux lumineux focalisés de la première, de la seconde et de la troisième tache lumineuse réfléchie par le support d'enregistrement,

un dispositif de calcul (16) destiné à déterminer le signal d'erreur de poursuite d'après le résultat de la détection du photodétecteur,

l'appareil étant caractérisé en ce qu'un substrat transparent (17) est incorporé aux réseaux plans de diffraction, et en ce que la seconde et la troisième tache lumineuse sont projetées d'un côté de la première tache lumineuse de manière que chacune des seconde et troisième taches lumineuses recouvre à la fois l'intérieur et l'extérieur de la piste du sillon.

2. Appareil de détection d'une erreur de poursuite selon la revendication 1, comprenant en outre un prisme (73) et un répartiteur (7) de faisceau lumineux, et dans lequel le dispositif de diffraction (13) et le prisme (73) sont placés entre la source lumineuse (2) et le répartiteur (7) de faisceau lumineux.

3. Appareil de détection d'une erreur de poursuite selon la revendication 1 ou 2, dans lequel les photodétecteurs (14) comprennent un premier photodétecteur (22) destiné à recevoir la lumière réfléchie par la première tache lumineuse (SP1), et un second (23) et un troisième (24) photodétecteur disposés en série et destinés à recevoir la lumière réfléchie par la seconde (SP4) et la troisième (SP5) tache respectivement.

4. Appareil de détection d'une erreur de poursuite selon la revendication 3, dans lequel les photodétecteurs (14) comportent en outre un quatrième photodétecteur (25) placé symétriquement par rapport au second (23) ou au troisième (24) photodétecteur par rapport au premier photodétecteur (22), et l'appareil comporte en outre un dispositif d'ajustement du dispositif de diffraction (13) à l'aide des signaux de sortie des photodétecteurs, du premier au quatrième.

5. Appareil de détection d'une erreur de poursuite selon l'une quelconque des revendications précédentes, dans lequel le dispositif de diffraction (13) crée le second faisceau lumineux ou le troisième faisceau lumineux ayant de la lumière diffractée du premier ordre positif.

6. Procédé de détection d'une erreur de poursuite (TE) et d'une erreur de focalisation (FE) dans une opération de poursuite d'une piste de sillon (15) formée sur un support d'enregistrement (1), comprenant les étapes suivantes :

(a) la projection d'une première tache lumineuse (SP1) sur la piste du sillon formée sur le support d'enregistrement sous forme d'un faisceau lumineux focalisé pour l'enregistrement, la lecture ou l'effacement d'informations sur la piste du sillon du support d'enregistrement,

(b) la projection d'une seconde tache (SP4) et d'une troisième tache (SP5) constituant un premier groupe de taches lumineuses, sur une zone entourant la piste du sillon sur le support d'enregistrement sous forme de faisceaux lumineux focalisés, en même temps que l'étape (a), pour la création d'un signal d'erreur de poursuite,

(c) la détection optique, à l'aide de plusieurs photodétecteurs (22 à 24), des réflexions des taches lumineuses de la première à la troisième, à partir du support d'enregistrement, et

(d) l'obtention d'un signal d'erreur de poursuite dans une opération de poursuite de la piste du sillon par calcul à partir des résultats de la détection optique par les photodétecteurs (22 à 24),

le procédé étant caractérisé par

(e) la projection d'une quatrième tache lumineuse (SP6) et d'une cinquième tache lumineuse (SP7) sous forme d'un second groupe de taches lumineuses sur la zone qui entoure la piste du sillon sur le support d'enregistrement sous forme de faisceaux lumineux focalisés en même temps que l'étape (a) pour la création d'un signal d'erreur de focalisation, les taches lumineuses, de la seconde à la cinquième, étant projetées de manière que la tache appartenant à un groupe soit projetée d'un côté de la première tache lumineuse, que la partie de sillon et la partie sans sillon soient distinguées, que la tache lumineuse focalisée et la tache lumineuse non focalisée soient distinguées, et que chacune des taches, de la seconde à la cinquième, recouvre à la fois l'intérieur et l'extérieur de la piste du sillon,

(f) la détection optique, par plusieurs photodétecteurs (26, 27), de la lumière réfléchie provenant de la quatrième et de la cinquième tache lumineuse, après réflexion par le support d'enregistrement, et

(g) l'obtention d'un signal d'erreur de focalisation dans une opération de poursuite de la piste du sillon par calcul à l'aide des résultats de la détection optique réalisée par les photodétecteurs (26, 27).

7. Procédé selon la revendication 6, dans lequel la seconde tache (SP4) et la troisième tache lumineuse (SP5) ont la lumière diffractée d'ordre +1 pour la détection de l'erreur de poursuite et la quatrième tache (SP6) et la cinquième tache (SP7) ont la lumière diffractée d'ordre -1 pour la détection de l'erreur de focalisation.

# Fig. 1

Fig. 2

SPOT 3

DISTANCE d

DISTANCE d

SPOT 1

SPOT 2

PRE-GROOVE

OPTICAL DISK
PRE-GROOVE

OBJECT LENS

DIFFRACTION GRATING

CONDENSER LENS

DETECTION CIRCUIT

PHOTO-DETECTOR

# Fig 3

SP2   SP1   SP3

1

9

8

10   14   16

7   D3

D1

6   D2

4

2

# Fig. 4

$$\frac{\lambda}{8}$$

# *Fig. 5*

# *Fig. 6*

# *Fig. 7*

# Fig. 8

# Fig. 9

DISTRIBUTION OF SPOTS

## Fig.10

SP5  d2  SP1  $\theta_1$  AR (DISK MEDIUM MOVEMENT DIRECTION)

$d_T$

15 (PRE-GROOVE)  SP4  d1  $\theta_2$  1 (DISK MEDIUM)

DIFFRACTION GRATINGS

z LIGHT AXIS

## Fig.11

$\theta_1$  y DISK MEDIUM TRANSFER DIRECTION

1st GRATING 18  x

y

2nd GRATING 19  $\theta_2$  x

20

EP 0 330 481 B1

EP 0 330 481 B1

Fig. 12

Fig. 13

20

*Fig. 14*

RUGGED SURFACE TYPE

PT

*Fig. 15*

VOLUMETRIC TYPE

PT

*Fig. 16*

INTEGRATED TYPE

18 $G_1$

19 $G_2$

17 (SUBSTRATE)

*Fig. 17*

MULTIPLE LAYER TYPE

18 $G_1$

19 $G_2$

17 (SUBSTRATE)

*Fig. 18*

18   19

$G_1 + G_2$

17

## Fig. 19

ONE-INTERFERENCE BETWEEN
THREE LIGHT BEAMS

## Fig. 20

TWO-INTERFERENCE BETWEEN
TWO LIGHT BEAMS

Fig. 21

Fig. 22

# Fig. 23

# Fig. 24

# Fig. 25

# Fig. 26

# Fig. 27

Fig. 28

EP 0 330 481 B1

# Fig. 29

FOCUSING ERROR DETECTION

*Fig. 30*

S 3 ○————▷——○ TE

S 2 ○————

*Fig. 31*

S51 S52 S53 S41 S42 S43

*Fig. 32*

*Fig. 33*

SP1 SP4 SP5

23 24

SP1 SP4 SP5

23 24

*Fig. 34*

SP1 SP4 SP5

23 24

*Fig. 35*

26  27

*Fig. 36*

26  27

*Fig. 37*

26  27

*Fig. 38*

26  27

*Fig. 39*

26  27

*Fig. 40*

26  27